# EUROPEAN PATENT SPECIFICATION

(11) **EP 3 332 155 B1**
(45) Date of publication and mention of the grant of the patent: **21.10.2020**
(21) Application number: 16748102.7
(22) Date of filing: 01.08.2016
(51) Int. Cl.: F16H 37/02, F16H 3/10, F16H 3/089, B62M 7/12

(54) **THREE-SPEED MOTORCYCLE TRANSMISSION**
MOTORRADGETRIEBE MIT DREI GESCHWINDIGKEITEN
TRANSMISSION DE MOTOCYCLE À TROIS VITESSES

(30) Priority: 03.08.2015 IT UB20152778
(43) Date of publication of application: 13.06.2018
(73) Proprietor: PIAGGIO & C. S.p.A., 56025 Pontedera (Pisa) (IT)
(72) Inventor: NESTI, Paolo, 56025 Pontedera (PI) (IT); MARIOTTI, Walter, 56025 Pontedera (PI) (IT)
(74) Representative: Giraldi, Elisa
(86) International application number: PCT/EP2016/068289
(87) International publication number: WO 2017/021352

(56) References cited:
- EP-A1- 2 151 602
- US-A- 4 505 352

## Description

The present invention has as subject a three-speed synchronous transmission, in particular to be used aboard a motorcycle, such as a scooter, as transmission means for transmitting the motion generated by an engine to a single driving wheel or a double driving wheel, in particular the rear wheel of a motorcycle. In the following, motorcycles and scooters are considered equivalent.

In the scooters of last generation the most commonly used transmission is of the CVT (*Continuously variable transmission*) type, called continuous transmission or continuous variator.

CVT has the advantage of providing a continuous traction and of not requesting the manual actuation of the different ratios. However, by using means of sliding type, such transmission is characterized by a low efficiency, above all in the transitory manoeuvers when the hysteresis effect of the transmission belt is maximum.

This pushes downwards the general efficiency of the vehicle and increases the consumption thereof.

On the other hand, a much felt requirement in the field is that of limiting the consumption as much as possible, however, if requested by the market, by keeping the comfort level thereto the users have got used by the CVT transmission.

US patent No. 4,505,352 A discloses a transmission for motorcycles having pulleys but no free wheel to transmit the motion.

European patent application No. 2,151,602 A1 discloses a stepped transmission for motorcycles using no pulley.

The object underlying the present invention is then to increase significantly the overall efficiency of the transmission in two-wheel or three-wheel motorcycles for the urban transport.

The idea underlying the present invention is to provide a synchronous transmission, i.e. including belts but of synchronous type, e.g. equipped with suitable teeth for the synchronous transmission of the motion from the pulley to the belt and from the belt to the pulley, wherein the hysteresis effect is reduced to the minimum and therefor the efficiency can be compared to the one which can be obtained with systems of pinion-chain-crown type.

In order to guarantee an adequate *range* (the value given by the ratio in the highest gear divided by the ratio in the first gear) and which can be compared to the one guaranteed by a traditional *CVT* system, three speeds are provided.

Therefore, the above-mentioned problem is solved by a three-speed synchronous transmission according to claim 1. The dependent claims concern particular embodiments of the invention as defined in claim 1.

The main advantage of the three-speed synchronous transmission according to the present invention lies in having performances similar to those of a continuously variable transmission but, at the same time, a high efficiency and an easy automatic operation.

In the light of what above stated, it is possible implementing this synchronous transmission in a simple and compact solution which can be automatized.

The present invention will be described hereinafter according to a preferred embodiment example thereof, provided by way of example and not with limitative purposes by referring to the enclosed drawings wherein:
- figure 1 shows a longitudinal section view of an example of three-speed synchronous transmission according to the invention;
- figure 2 shows an axonometric view of a detail of the synchronous transmission of figure 1; and
- figures 3A, 3B and 3C shows respective longitudinal section view of the synchronous transmission of figure 1, and illustrate the transmission of the first, second and third speed, as shown by the figure.

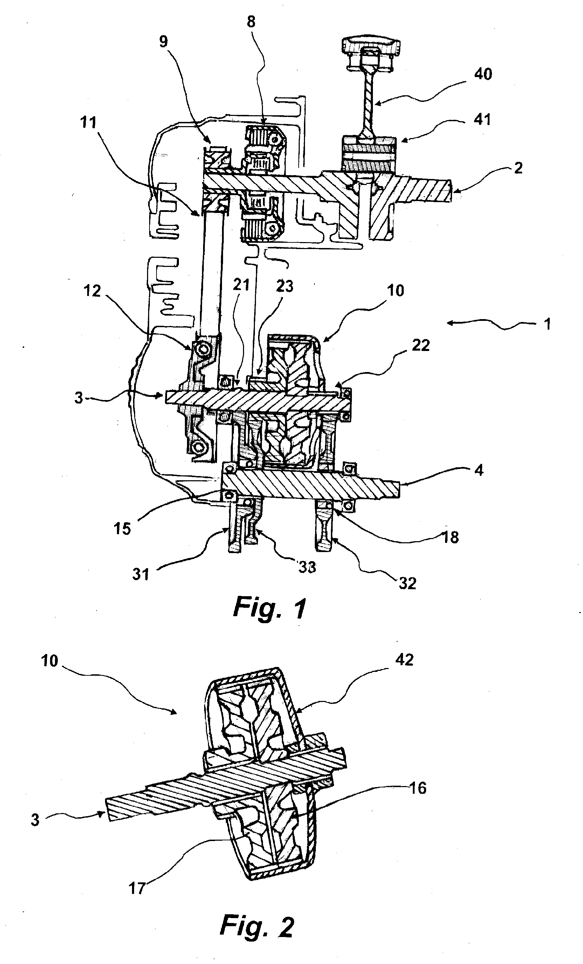

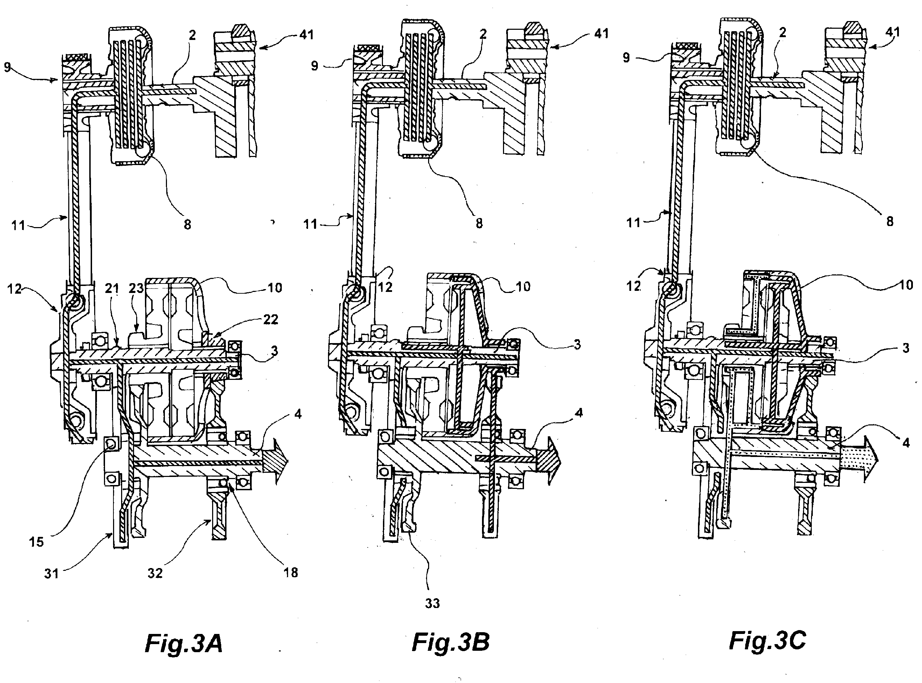

By referring to figures 1 to 3C, a speed transmission with several speeds, in particular three speeds, is designated as a whole with 1. It is of the type suitable to be assembled on a motor vehicle as transmission means which actuates a driving wheel of the motor vehicle, in particular a scooter, that is the (not represented) rear wheel thereof.

To this purpose, it comprises a crankshaft 2, which is made to rotate by the engine, thereof the relative piston rod 40 and crank 41 are represented, and a first driven shaft, that is the primary shaft 3, and a secondary shaft 4, which can be connected directly to the wheel or which transmits the rotation to a (not represented) hub shaft which is connected to the driving wheel of the vehicle. In the first case secondary shaft and hub shaft coincide.

It is to be noted that the arrangement of the shafts is so that the crankshaft 2 assumes a position which is substantially parallel to the rotation axis of the driving wheel, that is the hub shaft. Therefore, this transmission organ has the task of transferring the motion from an engine, which has a crankshaft transversal to the motor vehicle, to a wheel having, too, an axis transversal to the vehicle.

The passage from secondary shaft 4 to a hub can take place through a pair of (not represented) gears having the function of inverting the rotation direction transmitted to the driving wheel, which in this case is simultaneous to the rotation direction of the crankshaft 2, and they insert a fixed reduction ratio onto the hub. If the hub shaft coincides with the secondary shaft 4, it is necessary that the rotation direction of the crankshaft 2 in the forward gear is opposite to the forward rotation direction of the driving wheel.

In the light of what illustrated above, in any case the secondary shaft 4 is directly or indirectly connected, from the mechanical point of view, to the driving wheel thereto the transmission refers.

The crankshaft 2 and the primary shaft 3 are substantially parallel and they are connected by transmission means allowing to transmit the motion, regardless the different speed ratios. Such transmission means comprises a first pulley 9, mounted on the crankshaft 2, a second pulley 12 mounted on the primary shaft 3, and a transmission belt 11 extending between the two pulleys.

In the present embodiment example as well as in the subsequent ones, the transmission belts are synchronous transmission belts; under synchronous belt a belt is meant, usually a toothed belt, transmitting the motion from a wheel to toothed pulley to another wheel or toothed pulley with a transmission ratio which is determined by the ratio between the diameters of the wheels, without it suffers from losses by friction or sliding.

The absence of sliding portions and/or portions dragged by friction, typical instead of the transmissions of CVT (*Continuously variable transmission*) type, also known as continuous transmissions or continuous variators, makes the herein described speed transmission of synchronous type.

Therefore, in the present embodiment example as well as in the subsequent ones, the above-mentioned pulleys are toothed pulleys, connected by a toothed belt, preferably of the type made of rubber.

On the crankshaft 2 a main clutch 8 is mounted which, in the present example, is of centrifugal type, well known in the art. This clutch type allows transmitting the motion from the crankshaft 2 to the transmission means in cascade, and automatically a rotation regime comprised in a prefixed range is established, for example between 1000 and 2000 revolutions per minute. At a lower rotation regime, the clutch 8 is not engaged and the engine is in neutral, whereas the driving wheel is not stressed.

It is meant, however, that in particular applications, this clutch type can be replaced by a clutch with manual coupling which is perfectly equivalent, or by a clutch actuated by a servomechanism.

In any case, the transmission 1 comprises a driven tract of crankshaft 2 receiving the motion through said main clutch 8, from a driving tract of the crankshaft receiving the motion from the piston.

Three gears are mounted, then a set of three driving gears comprising a first driving gear 21, a second driving gear 22 and a third driving gear 23 are mounted on the primary shaft 3; under driving gear a wheel is meant which receives the motion on the axis thereof and transmits it to a driven wheel mounted on another axis.

Therefore, respective three gears, then a set of three driven gears, comprising a first driven gear 31, a second driven gear 32 and a third driven gear 33, engaged with said first driving gear 21, second driving gear 22 and third driving gear 23, for the transmission of the first, second and third speed, respectively, are mounted on the secondary shaft 4.

The transmission 1 comprises a clutch 10 acting selectively on at least two pairs of gears assigned to the transmission of two of the three speeds.

For reasons of overall dimensions to be minimized, the clutch is arranged on the primary shaft 3, and it acts on the second and on the third driving gear 22, 23 being positioned therebetween. It is to be noted that (figures 3A, 3B and 3C) the third driving gear 23 is positioned between the other two driving gears, that is it is arranged between the first driving gear 21 and the clutch 10. Analogously, the third driven gear 33 is positioned between the other two driven gears, that is it is arranged between the first driven gear 31 and the clutch 10.

The clutch 10 is then capable to act selectively to synchronize two different gears on the same axis; then it comprises a double synchronizer inside a casing 42. Conveniently for greater construction simplicity, each synchronizer comprises a synchronization plate which is activated by automatic synchronizing means, for example centrifugal means, well known in the art, which activate upon reaching a certain rotation regime of the primary shaft 3 which is the same, after deducting possible reduction ratios, between the above-mentioned pulleys, of the crankshaft.

Therefore, a first plate 16 will be activated to synchronize the second driving gear 22, the innermost one in the transmission 1, upon reaching a first predetermined rotation regime; whereas a second plate 17 will be activated to synchronize the third driving gear 23, the one in the intermediate position, upon reaching a second predetermined rotation regime.

At last, the transmission 1 comprises two free wheels arranged at the pairs of gears assigned to the transmission of the first and second speed. In particular a first free wheel 15 is provided, arranged on the secondary shaft 4 at the first driven gear 31, and a second free wheel 18, arranged on the secondary shaft 4 at the second driven gear 32, which is the innermost one with respect to the positioning of the transmission 1.

The operation of the above-described transmission is so schematically summarized: at first the engine runs in neutral and it results to be detached from the transmission thanks to the presence of the main clutch 8 of centrifugal type which, at the minimum revolutions, results to be open.

At a predetermined rpm's (figure 3A), the centrifugal clutch 8 closes and through the pulley 9 the motion from the crankshaft 2 is transmitted to the primary shaft 3 of the transmission 1 which is dragged by the second pulley 12; the transmission of the motion takes place through the synchronous belt 11. From the primary shaft 3, the rotation is transmitted to the secondary shaft 4 through the pair of the first driving and driven gears 21, 31.

At a predetermined moment, which is autonomously set by the system the passage from the first to the second speed (figure 3B) is requested.

In this case, the first synchronization plate 16 of the clutch 10 intervenes by synchronizing the pair of the second gears 22, 32, by acting on the driving one, whereas the first driven gear 31, which receives the motion from the respective first driving gear 21, rotates idly on the first free wheel 15.

Therefore, since the secondary shaft 4 starts rotating faster than the speed thereat it could rotate if it drove the transmission ratio assigned to the first speed, the gears of the first pair are unconstrained and then excluded from the transmission.

At a predetermined instant, autonomously set in the system, it is requested to pass from the second to the third speed (figure 3C).

In this case, the second synchronization plate 17 of the clutch 10 intervenes by synchronizing the pair of the third gears 23, 33, by acting on the driving one, whereas even the second driven gear 32, which receives the motion from the respective second driving gear 22, rotates idly on the second free wheel 18.

Therefore, since the secondary shaft 4 starts rotating faster than the speed thereat it could rotate if it drove the transmission ratio assigned to the second speed, even the gears of the second one are unconstrained and then excluded from the transmission.

In the herein illustrated embodiment examples, both synchronizers 16, 17 are of automatic type, but it is meant that they could be replaced by synchronizers of actuated type, in order to obtain the freedom of being able to impose to the system any transmission ratio by a system with a control logic or in case by the driver.

In the description of the first embodiment example a particular arrangement of the free wheels 15, 18 was considered. However, it is to be meant that one or two of the free wheels could be arranged in case even on the primary shaft 3, associated to the driving gears instead of to the driven ones.

Likewise, even the synchronization could be actuated on the driven wheels instead of on the driving wheels. Conveniently, synchronizers and free wheels find an easier place on different shafts.

To the above-described three-speed synchronous transmission a person skilled in the art, with the purpose of satisfying additional and contingent needs, could introduce several modifications and variants, all however comprised within the protective scope of the present invention, as defined by the enclosed claims.

## Claims

1. A three-speed synchronous transmission (1), suitable for being used aboard a motorcycle as transmission means for transmitting the motion generated by an engine to a driving wheel, in particular the rear wheel of the motorcycle, comprising:
• a first pulley (9) suitable for being mounted on a crankshaft (2), which receives motion of the engine;
• a primary shaft (3), having a second pulley (12) and a first set of three gears (21, 22, 23) mounted thereon,
• a synchronous transmission belt (11) connecting said first and said second pulley (9, 12);
• a secondary shaft (4), suitable for being connected to the driving wheel, comprising a second set of three gears (31, 32, 33), engaged in pairs with respective gears (21, 22, 23) of the first set of three gears for the transmission of the first, second and third speed;
• a clutch (10) acting selectively on at least two pairs of gears assigned to the transmission of the second and third speeds; and
• two free wheels (15, 18) arranged at the pairs of gears assigned to the transmission of the first and second speed.

2. The three-speed transmission (1) according to claim 1, wherein the free wheels (15, 18) are assembled on the primary shaft (3).

3. The three-speed transmission (1) according to claim 1, wherein the synchronous transmission belt (11) is -a a toothed belt, said pulleys (9, 12) being toothed to implement a synchronous transmission of the motion.

4. The three-speed transmission (1) according to claim 1, wherein the crankshaft (2) comprises a centrifugal clutch (8).

5. The four-speed transmission (1) according to claim 1, wherein the secondary shaft (4) is engaged with a hub shaft, which is connected directly to a driving wheel, by means of a pair of gears determining a reducing ratio.

6. The three-speed transmission (1) according to claim 1, wherein said selective clutch (10) is arranged on the primary shaft (3).

7. The three-speed transmission (1) according to claim 6, wherein said selective clutch (10) is positioned between a second and a third driving gear (22, 23) of said pair of driving wheels, assigned to the transmission of the second and third speeds, and wherein the third driving gear (23) is positioned between the other two driving gears (21, 22), assigned to the transmission of the first and second speed.

8. The three-speed transmission (1) according to claim 7, wherein the third driving gear (23) is arranged between the first driving gear (21), assigned to the transmission of the first speed, and the clutch (10), and analogously the third driven gear (33) arranged between the first driven gear (31) and the clutch (10).

9. The three-speed transmission (1) according to claim 1, wherein said selective clutch (10) comprises a double synchronizer, each synchronizer comprising a synchronization plate (16, 17), which is activated by synchronizing means of centrifugal type, respectively associated to the pairs of gears assigned to the transmission of the second and third speeds.

10. Motorcycle or scooter vehicle including a three speed transmission of any of the previous claims.

## Patentansprüche

1. Synchrongetriebe mit drei Geschwindigkeiten (1), das dazu geeignet ist,
in einem Motorrad als Übertragungsmittel verwendet zu werden, um den von einem Motor erzeugten Antrieb auf ein Antriebsrad zu übertragen, wobei insbesondere das Hinterrad des Motorrads Folgendes umfasst:
• eine erste Riemenscheibe (9), die dazu geeignet ist, auf einer Antriebswelle (2) eingebaut zu werden, welche den Antrieb vom Motor erhält;
• eine Primärwelle (3) mit einer zweiten Riemenscheibe (12) und einem ersten Satz von drei Zahnrädern (21, 22, 23), die darauf montiert sind,
• einen Synchronübertragungsriemen (11), der die erste und die zweite Riemenscheibe (9, 12) verbindet;
• eine Sekundärwelle (4), die dazu geeignet ist, mit dem Antriebsrad verbunden zu werden, umfassend einen zweiten Satz von drei Zahnrädern (31, 32, 33), die in Paare von entsprechenden Zahnrädern (21, 22, 23) des ersten Satzes von drei Zahnrädern zur Übertragung der ersten, zweiten und dritten Geschwindigkeit eingreifen;
• eine Kupplung (10), die selektiv auf mindestens zwei Paare von Zahnrädern wirkt, die der Übertragung der zweiten und dritten Geschwindigkeit zugeordnet sind; und
• zwei Freiläufe (15, 18), die an dem Paar von Zahnrädern angeordnet sind, die der Übertragung der ersten und zweiten Geschwindigkeit zugeordnet sind.

2. Getriebe mit drei Geschwindigkeiten (1) nach Anspruch 1, wobei die Freiläufe (15, 18) auf der Primärwelle (3) eingebaut sind.

3. Getriebe mit drei Geschwindigkeiten (1) nach Anspruch 1, wobei der Synchrongetrieberiemen (11) ein Zahnriemen ist, wobei die Riemenscheiben (9, 12) gezahnt sind, um eine synchrone Übertragung des Antriebs umzusetzen.

4. Getriebe mit drei Geschwindigkeiten (1) nach Anspruch 1, wobei die Antriebswelle (2) eine Fliehkraftkupplung (8) umfasst.

5. Getriebe mit vier Geschwindigkeiten (1) nach Anspruch 1, wobei die Sekundärwelle (4) in eine Nabenwelle eingreift, die mittels eines Paares von zu einem Untersetzungsverhältnis führenden Zahnrädern direkt mit einem Antriebsrad verbunden ist.

6. Getriebe mit drei Geschwindigkeiten (1) nach Anspruch 1, wobei die selektive Kupplung (10) auf der Primärwelle (3) angeordnet ist.

7. Getriebe mit drei Geschwindigkeiten (1) nach Anspruch 6, wobei die selektive Kupplung (10) zwischen einem zweiten und einem dritten Antriebszahnrad (22, 23) des Paares von Antriebsrädern positioniert ist, die der Übertragung der zweiten und dritten Geschwindigkeit zugeordnet sind, und wobei das dritte Antriebszahnrad (23) zwischen den anderen beiden Antriebszahnrädern (21, 22) positioniert ist, die der Übertragung der ersten und zweiten Geschwindigkeit zugeordnet sind.

8. Getriebe mit drei Geschwindigkeiten (1) nach Anspruch 7, wobei das dritte Antriebszahnrad (23) zwischen dem ersten, der Übertragung der ersten Geschwindigkeit zugeordneten Antriebszahnrad (21) und der Kupplung (10) angeordnet ist, analog zum dritten Abtriebszahnrad (33), das zwischen dem ersten Abtriebszahnrad (31) und der Kupplung (10) angeordnet ist.

9. Getriebe mit drei Geschwindigkeiten (1) nach Anspruch 1, wobei die selektive Kupplung (10) eine doppelte Synchronisiereinrichtung umfasst, wobei jede Synchronisiereinrichtung eine Synchronisierungsplatte (16, 17) umfasst, die durch Synchronierungsmittel vom Fliehkrafttyp aktiviert wird, die jeweils mit den Paaren von Zahnrädern verbunden sind, die der Übertragung der zweiten und dritten Geschwindigkeit zugeordnet sind.

10. Motorrad oder Motorroller, das/der ein Getriebe mit drei Geschwindigkeiten nach einem der vorstehenden Ansprüche aufweist.

## Revendications

1. Boîte de vitesses synchronisées à trois vitesses (1), appropriée pour une utilisation
sur une motocyclette comme moyen de transmission pour transmettre le mouvement généré par un moteur à une roue motrice, en particulier la roue arrière de la motocyclette, comprenant :
• une première poulie (9) appropriée pour être fixée sur un vilebrequin (2), qui reçoit le mouvement du moteur ;
• un arbre primaire (3), comportant une seconde poulie (12) et un premier ensemble de trois roues d'engrenage (21, 22, 23) fixées sur lui,
• une courroie de transmission synchrone (11) reliant lesdites première et seconde poulies (9, 12) ;
• un arbre secondaire (4), approprié pour être relié à la roue motrice, comprenant un second ensemble de trois roues d'engrenage (31, 32, 33), en prise par paires avec des roues d'engrenage respectives (21, 22, 23) du premier ensemble de trois roues d'engrenage pour la transmission des première, deuxième et troisième vitesses ;
• un embrayage (10) agissant de manière sélective sur au moins deux paires de roues d'engrenage affectées à la transmission des deuxième et troisième vitesses ; et
• deux roues libres (15, 18) placées au niveau des paires de roues d'engrenage affectées à la transmission des première et deuxième vitesses.

2. Boîte de vitesses à trois vitesses (1) selon la revendication 1, dans laquelle les roues libres (15, 18) sont montées sur l'arbre primaire (3).

3. Boîte de vitesses à trois vitesses (1) selon la revendication 1, dans laquelle la courroie de transmission synchrone (11) est une courroie crantée, lesdites poulies (9, 12) étant crantées pour mettre en œuvre une transmission synchrone du mouvement.

4. Boîte de vitesses à trois vitesses (1) selon la revendication 1, dans laquelle le vilebrequin (2) comprend un embrayage centrifuge (8).

5. Boîte de vitesses à quatre vitesses (1) selon la revendication 1, dans laquelle l'arbre secondaire (4) est en prise avec un axe de moyeu, qui est directement relié à une roue motrice, au moyen d'une paire de roues d'engrenage déterminant un rapport de réduction.

6. Boîte de vitesses à trois vitesses (1) selon la revendication 1, dans laquelle ledit embrayage sélectif (10) est placé sur l'arbre primaire (3).

7. Boîte de vitesses à trois vitesses (1) selon la revendication 6, dans laquelle ledit embrayage sélectif (10) est positionné entre une deuxième et une troisième roue d'engrenage menante (22, 23) de ladite paire de roues motrices, affectées à la transmission des deuxième et troisième vitesses, et dans laquelle la troisième roue d'engrenage menante (23) est positionnée entre les deux autres roues d'engrenage menantes (21, 22), affectées à la transmission des première et deuxième vitesses.

8. Boîte de vitesses à trois vitesses (1) selon la revendication 7, dans laquelle la troisième roue d'engrenage menante (23) est placée entre la première roue d'engrenage menante (21), affectée à la transmission de la première vitesse, et l'embrayage (10) et, de manière analogue, la troisième roue d'engrenage menée (33) est placée entre la première roue d'engrenage menée (31) et l'embrayage (10).

9. Boîte de vitesses à trois vitesses (1) selon la revendication 1, dans laquelle ledit embrayage sélectif (10) comprend un double synchroniseur, chaque synchroniseur comprenant un disque de synchronisation (16, 17), qui est activé par des moyens de synchronisation du type centrifuge, respectivement associé à la paire de roues d'engrenage affectées à la transmission des deuxième et troisième vitesses.

10. Véhicule de type motocyclette ou scooter comprenant une boîte de vitesses à trois vitesses selon l'une quelconque des revendications précédentes.
